# FASCICULE DE BREVET EUROPEEN

(11) **EP 1 723 060 B1**
(45) Date de publication et mention de la délivrance du brevet: **18.07.2007**
(21) Numéro de dépôt: 05707951.9
(22) Date de dépôt: 07.02.2005
(51) Int. Cl.: B65G 47/84

(54) **DISPOSITIF DE CONVOYAGE COMPORTANT UN BRAS DE TRANSFERT**
FÖRDEREINRICHTUNG MIT EINEM VERBESSERTEN ÜBERGABEARM
CONVEYOR DEVICE WITH AN IMPROVED TRANSFER ARM

(30) Priorité: 05.03.2004 FR 0450454
(43) Date de publication de la demande: 22.11.2006
(73) Titulaire: SIDEL PARTICIPATIONS, 76930 Octeville-sur-Mer (FR)
(72) Inventeur: LEGALLAIS, Stéphane c/o Sidel Participations, F-76930 OCTEVILLE SUR MER (FR); BRACHET, Vincent c/o Sidel Participations, F-76930 OCTEVILLE SUR MER (FR); GILLET, Denis c/o Sidel Participations, F-76930 OCTEVILLE SUR MER (FR)
(74) Mandataire: Thibaudeau, David A. C. R.
(86) Numéro de dépôt international: PCT/EP2005/050499
(87) Numéro de publication internationale: WO 2005/095238

(56) Documents cités:
- FR-A- 2 802 191

## Description

La présente invention concerne un dispositif de convoyage d'objets.

La présente invention concerne plus particulièrement un dispositif de convoyage d'objets tels que des préformes et des bouteilles, du type comportant un support tournant qui est entraîné en rotation de manière continue autour d'un axe de rotation sensiblement vertical et qui porte un bras de transfert, du type dans lequel le bras de transfert comporte une platine qui est montée pivotante par rapport au support tournant, autour d'un arbre de pivotement sensiblement parallèle à l'axe de rotation du support, et une tête de préhension qui est apte à supporter au moins un objet et qui est montée coulissante par rapport à la platine, suivant une direction approximativement radiale par rapport à l'axe de rotation du support, entre une position rétractée proximale et une position allongée distale relativement à l'axe de rotation, du type dans lequel la tête de préhension est rapportée sur un coulisseau coulissant dans une glissière fixée sur la platine, et du type comportant un premier et un second systèmes à came pour entraîner respectivement la tête de préhension en coulissement et la platine en pivotement, en fonction de la position angulaire du bras autour de l'axe de rotation du support.

On trouve des dispositifs de convoyage de ce type dans les machines de soufflage de récipients dans lesquelles le récipient est obtenu par soufflage en introduisant dans un moule de soufflage une préforme précédemment réalisée par moulage par injection. Ces machines sont par exemple utilisées pour la fabrication de bouteilles en polyéthylène téréphtalate (PET).

La préforme présente la forme d'un tube qui est fermé à une extrémité et dont l'autre extrémité possède déjà la forme définitive du col du récipient.

La préforme est donc amenée à l'intérieur du moule après avoir été amenée à une température appropriée dans un four de conditionnement thermique. Une fois soufflé, chaque récipient est évacué du moule pour être dirigé vers la sortie de la machine.

De nombreuses machines de soufflage de récipients sont de type rotatif. Elles comportent alors un carrousel qui tourne de manière continue autour de son axe et qui porte, à sa périphérie, une série de moules identiques.

Les dispositifs de convoyage à bras de transfert permettent donc, d'une part, d'introduire des préformes dans les moules et, d'autre part, de retirer les récipients une fois formés, ceci sans avoir à arrêter le carrousel. Les bras de transfert en raison de leurs possibilités d'élongation et de rétraction, d'une part, et de la possibilité d'accélérer ou de ralentir les têtes grâce au pivotement, d'autre part, permettent d'éviter toute interférence entre les moules et les objets transportés.

Un dispositif de convoyage de ce type est décrit et représenté dans le document WO-A-01/44084 (FR 2 802 191).

Ce dispositif, bien qu'ayant donné satisfaction, présente toutefois certaines limites, notamment lorsqu'il est amené à fonctionner à des cadences très élevées. Le bras de transfert peut alors s'avérer relativement encombrant et lourd, ce qui se traduit par une inertie importante au cours des déplacements.

L'invention vise notamment à remédier à ces inconvénients en proposant un dispositif de convoyage comportant au moins un bras de transfert plus compact et plus léger.

Dans ce but, l'invention propose un dispositif de convoyage du type décrit précédemment, caractérisé en ce que le coulisseau est réalisé en une seule pièce globalement en forme de rail, le profil du coulisseau étant complémentaire du profil de la glissière, et en ce que la tête de préhension est fixée en porte-à-faux sur le tronçon d'extrémité distale du coulisseau.

Selon d'autres caractéristiques de l'invention :
- le premier système à came comporte un premier élément suiveur de came qui est fixé sur le tronçon d'extrémité distale du coulisseau ;
- le premier élément suiveur de came est un galet dit d'élongation qui est monté libre à rotation sur un arbre de galet sensiblement parallèle à l'axe de rotation du support, et l'arbre de galet est fixé sur le tronçon d'extrémité distale du coulisseau à travers une portion de la tête de préhension, de manière à constituer un moyen de fixation de la tête de préhension sur le coulisseau ;
- le bras de transfert comporte un organe de rappel qui est interposé globalement suivant l'axe d'élongation entre le tronçon d'extrémité distale du coulisseau et la platine de manière à rappeler la tête de préhension vers sa position rétractée ;
- l'extrémité distale de l'organe de rappel est fixée sur l'arbre portant le galet d'élongation ;
- la platine comporte un corps principal qui est muni d'une jambe de pivotement portant au moins un élément suiveur de came appartenant au second système à came, et l'extrémité proximale de l'organe de rappel est fixée sur la jambe de pivotement ;
- l'organe de rappel est un ressort à boudin de traction qui s'étend entièrement sous la face inférieure du coulisseau ;
- la tête de préhension comporte une patte pour sa fixation sur la face transversale d'extrémité distale du coulisseau et une vis de fixation qui est montée vissée dans la face transversale d'extrémité distale du coulisseau à travers la patte ;
- le tronçon d'extrémité proximale du coulisseau comporte une butée qui est susceptible de coopérer avec une surface associée de la platine pour déterminer la course maximale d'élongation de la tête de préhension ;
- la platine comporte un palier à roulements qui reçoit le tronçon d'extrémité axiale inférieure de l'arbre de pivotement de manière que la platine soit montée libre à rotation autour de l'arbre de pivotement ;
- l'arbre de pivotement comporte un tronçon intermédiaire fileté qui est vissé dans une entretoise fixée sur le support tournant pour permettre un réglage en hauteur de la platine par rapport au support tournant, et des moyens de blocage de l'arbre de pivotement en position réglée par rapport à l'entretoise ;
- l'extrémité axiale supérieure de l'arbre de pivotement comporte un moyen d'entraînement en rotation de l'arbre de pivotement en vue du réglage en hauteur de la platine.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un dispositif de convoyage équipé d'un bras de transfert réalisé conformément aux enseignements de l'invention ;
- la figure 2 est une vue en perspective qui représente schématiquement le bras de transfert de la figure 1 en position rétractée ;
- la figure 3 est une vue suivant le plan de coupe 3-3 qui représente schématiquement le bras de transfert de la figure 1 en position rétractée ;
- la figure 4 est une vue de dessus qui représente schématiquement le bras de transfert de la figure 1 en position rétractée.

Dans la description qui va suivre, des éléments identiques, similaires ou analogues seront désignés par les mêmes chiffres de référence.

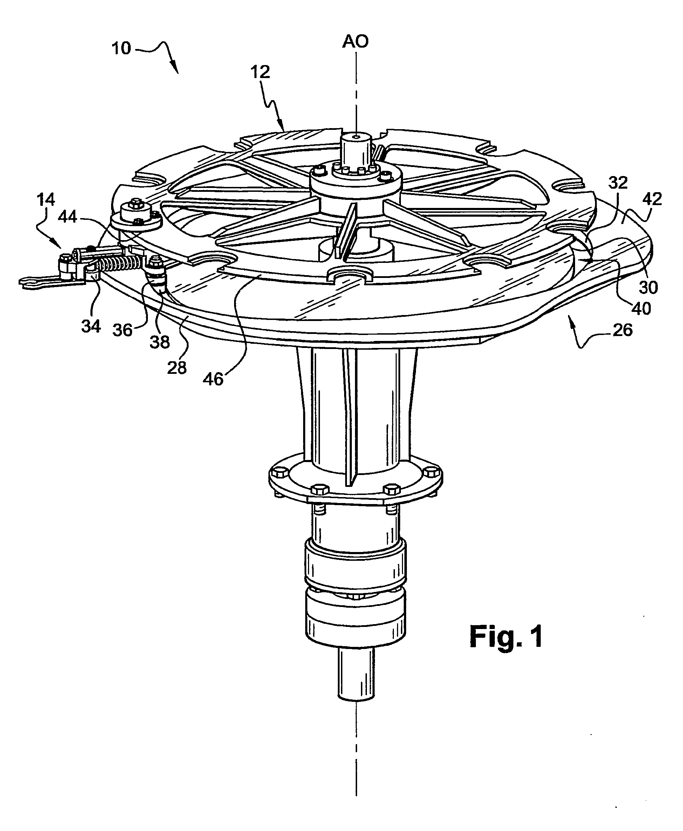

On a représenté sur la figure 1 un dispositif 10 de convoyage du type de ceux qu'on peut trouver dans les machines de fabrication de récipients en PET par soufflage de préformes, les préformes étant préalablement obtenues par moulage par injection puis étant réchauffées au-delà de la température de transition vitreuse du PET avant d'être successivement introduites dans des moules de soufflage.

Le dispositif 10 de convoyage peut servir notamment au convoyage des préformes ou au convoyage des récipients.

Le dispositif 10 de convoyage comporte un support 12 tournant qui est ici réalisé sous la forme d'un plateau et qui est entraîné en rotation de manière continue autour d'un axe de rotation A0 vertical.

Le support 12 porte un ou plusieurs bras 14 de transfert, un seul étant représenté sur la figure 1 pour simplifier la représentation.

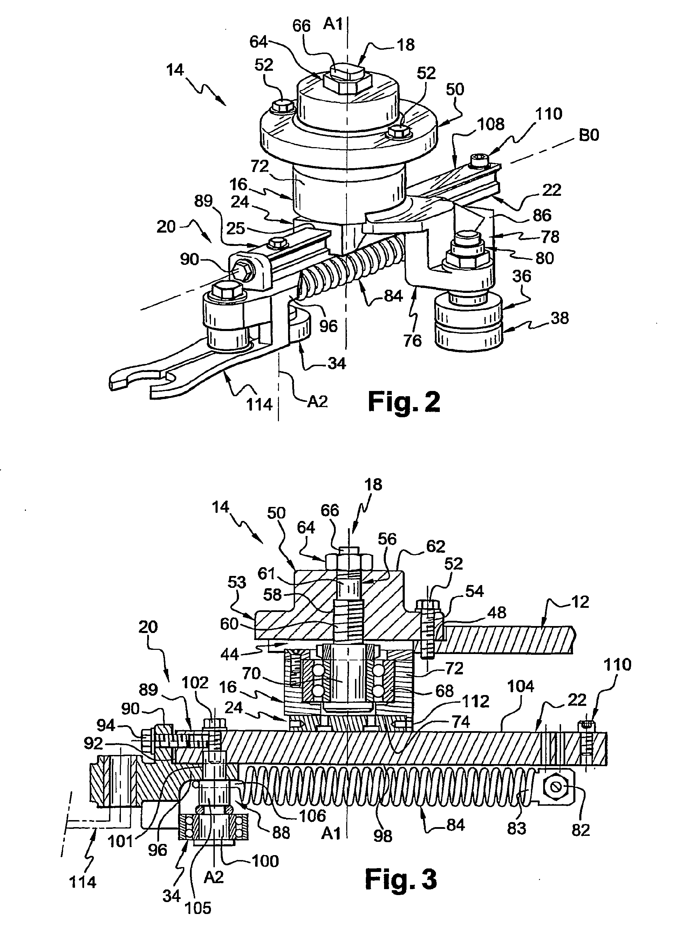

Comme on peut le voir sur les figures 2 et 3, le bras 14 de transfert comporte une platine 16 qui est montée pivotante par rapport au support 12, autour d'un arbre de pivotement 18 d'axe A1 sensiblement parallèle à l'axe de rotation A0 du support 12.

Le bras 14 de transfert comporte aussi une tête de préhension 20 qui est apte à supporter au moins une préforme ou un récipient (non représentés) et qui est montée coulissante par rapport à la platine 16, suivant une direction B0 approximativement radiale par rapport à l'axe de rotation A0 du support 12, entre une position rétractée proximale et une position allongée distale, relativement à l'axe de rotation A0.

Dans la suite de la description, on utilisera à titre non limitatif les termes "distal" et "proximal" pour qualifier des éléments du bras 14 de transfert en fonction de leur proximité avec l'axe de rotation A0 du support 12.

Sur la figure 1, la tête de préhension 20 est représentée en position allongée, et sur les figures 2, 3 et 4, la tête de préhension 20 est représentée en position rétractée.

La tête de préhension 20 est rapportée sur un coulisseau 22 réalisé en une seule pièce globalement en forme de rail qui est monté coulissant dans une glissière 24 fixée sur la platine 16.

La rainure 25 de la glissière 24 a ici un profil adapté, ici en "té", suivant une section transversale à la direction B0 et la rainure 25 est ouverte vers le bas.

Le profil du coulisseau 22 est complémentaire du profil de la rainure 25 de la glissière 24, de sorte que le coulisseau 22 est retenu verticalement vers le bas par la glissière 24 et son profil adapté.

Le coulisseau 22 est donc constitué d'un profilé métallique en "té", suivant une section transversale à la direction B0 de coulissement, et le coulisseau 22 est retenu verticalement dans la glissière 24 par les branches horizontales du "té".

On note que le coulisseau 22 et la glissière 24 peuvent être réalisés facilement par usinage.

De manière connue, le dispositif 10 de convoyage comporte un premier et un second systèmes à came pour entraîner respectivement la tête de préhension 20 en coulissement et la platine 16 en pivotement, en fonction de la position angulaire du bras 14 de transfert autour de l'axe de rotation A0 du support 12.

A cet effet, le dispositif 10 de convoyage comporte un plateau 26 fixe qui est agencé coaxialement sous le support 12 et qui est muni de chemins de came 28, 30, 32, ou surfaces de commandes, prévus pour coopérer avec des éléments suiveurs de came 34, 36, 38 associés portés par le coulisseau 22 et la platine 16.

Selon le mode de réalisation représenté ici, le premier système à came est constitué par un galet 34 fou dit d'élongation, d'axe A2 vertical, qui est porté par le coulisseau 22 et qui parcourt un chemin de came 28 réalisé sur une face axiale périphérique externe du plateau 26.

Le second système à came est constitué ici par deux galets 36, 38 fous dits de pivotement qui sont superposés et coaxiaux d'axe vertical, qui sont portés par la platine 16, et qui parcourent des chemins de came 30, 32 réalisés sur les parois axiales internes d'une rainure 40 réalisée dans la face 42 supérieure transversale du plateau 26.

Selon le mode de réalisation représenté ici, le bras 14 de transfert est reçu dans un logement 44 complémentaire aménagé dans le support 12. Ce logement 44 a ici la forme d'un trou circulaire ouvert du côté du bord 46 périphérique externe du support 12.

Le logement 44 comporte un épaulement qui délimite une surface 48 transversale supérieure d'appui.

Une entretoise 50 formant socle est fixée sur la surface 48 transversale d'appui du logement 44, ici au moyen de trois vis de fixation 52, verticales, qui sont vissées dans des trous associés agencés dans la surface 48 transversale d'appui.

L'entretoise 50 a globalement la forme d'un cylindre vertical muni, à son extrémité axiale inférieure, d'une collerette 53 radiale externe qui comporte des trous axiaux 54 pour le passage des vis de fixation 52 de l'entretoise 50.

L'entretoise 50 comporte un trou axial central 56 dont le tronçon 58 inférieur est taraudé. L'arbre de pivotement 18 comporte, quant à lui, un tronçon 60 intermédiaire fileté, dont le filetage est complémentaire du taraudage du tronçon 58 inférieur de l'arbre de pivotement 18.

Par cet agencement, l'arbre de pivotement 18 est fixé sur le support 12 par l'intermédiaire de l'entretoise 50, le tronçon 60 intermédiaire de l'arbre de pivotement 18 étant vissé dans le tronçon 58 inférieur taraudé complémentaire de l'entretoise 50.

Le tronçon 61 axial supérieur de l'arbre de pivotement 18 comporte aussi un filetage, lequel est prévu pour s'étendre axialement au-dessus de la face 62 transversale d'extrémité supérieure de l'entretoise 50, de manière qu'il puisse recevoir des moyens de blocage 64, par exemple un écrou venant en appui axial contre la face 62 transversale d'extrémité supérieure.

Avantageusement, l'extrémité supérieure du tronçon axial supérieur de l'arbre de pivotement 18 comporte un moyen d'entraînement 66 en rotation pour permettre le réglage en hauteur de l'arbre de pivotement 18. Ce moyen d'entraînement 66 est constitué ici par deux méplats diamétralement opposés, qui sont formés à l'extrémité axiale supérieure de l'arbre de pivotement 18.

Selon le mode de réalisation représenté ici, la platine 16 comporte un palier à roulements 68 qui reçoit le tronçon d'extrémité axiale inférieure 70 de l'arbre de pivotement 18 de manière que la platine 16 soit montée libre à rotation autour de l'arbre de pivotement 18 et de manière que la platine 16 soit immobile en translation axiale par rapport à l'arbre de pivotement 18.

La platine 16 comporte ici un corps 72 principal cylindrique coaxial à l'arbre de pivotement 18.

La glissière 24 est fixée sur la face 74 transversale inférieure du corps 72 principal.

Le corps 72 principal de la platine 16 est muni, sur un secteur angulaire, d'une jambe 76, dite de pivotement, qui s'étend latéralement par rapport à la glissière 24 et vers le bas par rapport au corps 72 principal.

La jambe 76 de pivotement comporte une plaque 78 transversale qui supporte les galets de pivotement 36, 38 du second système à came, en vue d'entraîner la platine 16 en pivotement autour de son axe A1 de pivotement.

Les galets de pivotement 36, 38 sont montés à libre rotation sur le tronçon d'extrémité inférieure d'un arbre 80 parallèle à l'axe A1 de pivotement de la platine 16.

La plaque 78 transversale comporte un plot 82 d'ancrage pour l'extrémité proximale 83 d'un organe 84 de rappel qui est interposé axialement, suivant la direction B0 de coulissement de la tête par rapport à la platine, entre le coulisseau 22 et la platine 16, de manière à rappeler la tête de préhension 20 vers sa position rétractée en plaquant le galet d'élongation 34 contre son chemin de came 28.

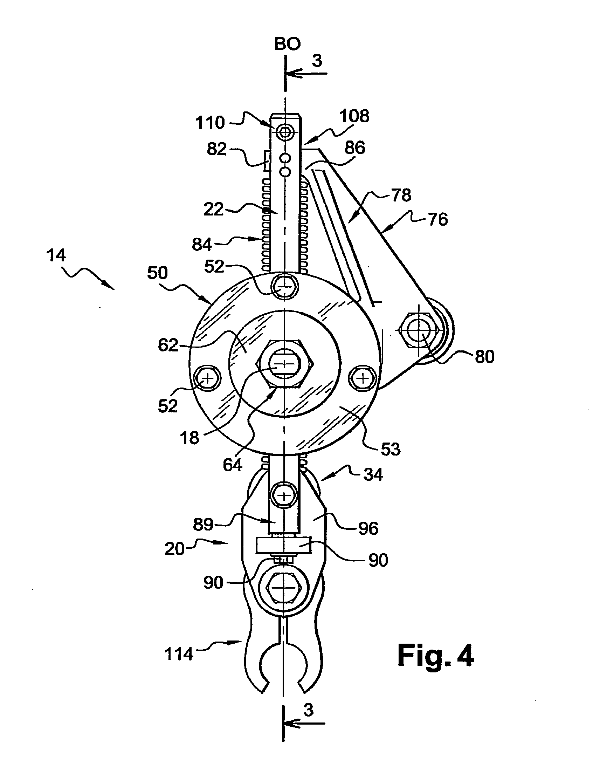

La forme de la plaque 78 transversale est particulièrement visible sur la figure 4.

La plaque 78 transversale comporte une extension 86 qui permet au plot 82 d'ancrage d'être contenu, avec le point 88 d'accrochage de l'organe 84 de rappel sur le coulisseau 22, dans un plan vertical passant par la direction B0 de coulissement de la tête par rapport à la platine.

Conformément aux enseignements de l'invention, le coulisseau 22 est réalisé en une seule pièce globalement en forme de rail, le profil du coulisseau étant complémentaire du profil de la glissière 24, et la tête de préhension 20 est fixée en porte-à-faux sur le tronçon 89 d'extrémité distale du coulisseau 22.

La tête de préhension 20 comporte ici une patte 90 d'extrémité pour sa fixation sur la face 92 transversale d'extrémité distale du coulisseau 22.

La patte 90 d'extrémité s'étend globalement dans un plan transversal à la direction B0 de coulissement de la tête par rapport à la platine.

Une vis de fixation 94 est montée vissée dans la face 92 transversale d'extrémité distale du coulisseau 22, à travers la patte 90 d'extrémité, suivant la direction B0 de coulissement de la tête par rapport à la platine.

La tête de préhension 20 comporte une patte inférieure 96 qui s'étend globalement dans un plan transversal à l'axe A1 de pivotement et qui est prévue pour la fixation de la tête de préhension 20 sur la face inférieure 98 du coulisseau 22.

Le galet d'élongation 34 est monté à libre rotation sur le tronçon d'extrémité inférieure d'un arbre 100, encore appelé arbre 100 de galet, sensiblement parallèle à l'axe de rotation A0 du support 12.

L'arbre 100 de galet est fixé sur la face inférieure 98 du tronçon 89 d'extrémité distale du coulisseau 22, à travers un trou vertical 101 aménagé dans la patte inférieure 96 de la tête de préhension 20.

Le tronçon 89 d'extrémité distale du coulisseau 22 comporte une vis de fixation verticale 102 qui est montée dans la face supérieure 104 du coulisseau 22 et qui est vissée dans le tronçon d'extrémité axiale supérieure de l'arbre 100 de galet.

L'arbre 100 de galet comporte ici une entretoise 105 qui est intercalée suivant l'axe A2 entre la face transversale inférieure de la patte inférieure 96 et le galet d'élongation 34, de manière que la patte inférieure 96 soit serrée axialement (A2) entre l'entretoise 105 et la face inférieure 98 du coulisseau 22.

L'arbre 100 de galet constitue ainsi un moyen de fixation de la tête de préhension 20 sur le coulisseau 22.

Avantageusement, le point 88 d'accrochage de l'extrémité distale 106 de l'organe 84 de rappel est agencé sur l'arbre 100 de galet, sous la patte inférieure 96.

De préférence, l'organe 84 de rappel est un ressort à boudin de traction qui s'étend entièrement sous la face inférieure 98 du coulisseau 22, lorsque la tête de préhension 20 occupe sa position rétractée.

De préférence, le tronçon d'extrémité proximale 108 du coulisseau 22 comporte un organe de sécurité constitué par une butée 110 qui est susceptible de coopérer avec une surface 112 associée du corps 72 principal de la platine 16 pour déterminer la course maximale d'élongation de la tête de préhension 20, et qui pourrait agir en cas de rupture de l'organe 84 de rappel.

La butée 110 est constituée ici par la tête cylindrique d'une vis qui est agencée dans la face supérieure 104 du tronçon d'extrémité proximale 108 du coulisseau 22. Ainsi, la butée 110 est susceptible de coopérer avec ladite surface 112 du corps 72 principal de la platine 16 en vis-à-vis.

La tête de préhension 20 comporte à son extrémité axiale distale une pince 114 de préhension apte à saisir et porter des préformes ou des récipients.

On ne décrira pas ici le mécanisme de commande de la pince 114 de préhension, qui peut être réalisé suivant l'état de la technique.

Grâce à la réalisation globalement en une seule pièce du coulisseau 22 et à la fixation en porte-à-faux de la tête de préhension 20 sur le tronçon 89 d'extrémité distale du coulisseau 22, la tête de préhension 20 est fixée directement sur le coulisseau 22, sans pièce intermédiaire, ce qui permet de diminuer le nombre de pièces nécessaires et donc de diminuer le poids de l'ensemble formé par la tête de préhension 20 et le coulisseau 22.

On note que le tronçon 89 d'extrémité distale du coulisseau 22 s'étend toujours du côté distal de la platine 16.

On constate que la longueur du bras 14 de transfert selon l'invention n'est pas modifiée pendant son fonctionnement. En effet, l'élongation du bras de transfert 14 est provoquée uniquement par un décalage du coulisseau 22 par rapport à l'axe A1 de pivotement de la platine 16, ce qui permet notamment de minimiser les phénomènes vibratoires.

L'agencement du ressort de rappel 84 sous la face inférieure 98 du coulisseau 22 permet de minimiser l'encombrement latéral du bras 14 de transfert, c'est-à-dire l'encombrement selon une direction qui est orthogonale à la direction B0 et qui est contenue dans un plan transversal à l'axe de rotation A0 du support 12. En particulier, la jambe 76 de pivotement peut être agencée au voisinage des faces latérales du coulisseau 22.

Grâce au montage vissé de l'arbre de pivotement 18 dans l'entretoise 50, il est possible de régler facilement la position verticale du bras 14 de transfert par rapport au support 12.

En effet, en utilisant une clé appropriée qui coopère avec le moyen d'entraînement 66 constitué par les méplats agencés à l'extrémité supérieure de l'arbre de pivotement 18, on peut visser ou dévisser l'arbre de pivotement dans l'entretoise 50, ce qui provoque un déplacement axial de l'arbre de pivotement 18 par rapport à l'entretoise 50.

Lorsque la position verticale de l'arbre de pivotement 18 est réglée, il suffit alors de serrer l'écrou constituant les moyens de blocage 64 contre l'entretoise 50 pour bloquer l'arbre de pivotement 18 dans l'entretoise 50.

Il est donc possible de régler la hauteur du bras 14 de transfert sur le support 12 sans qu'il soit nécessaire de démonter le bras 14 de transfert.

## Revendications

1. Dispositif (10) de convoyage d'objets tels que des préformes et des bouteilles, du type comportant un support (12) tournant qui est entraîné en rotation de manière continue autour d'un axe de rotation (A0) sensiblement vertical et qui porte un bras (14) de transfert, du type dans lequel le bras (14) de transfert comporte une platine (16) qui est montée pivotante par rapport au support (12) tournant, autour d'un arbre de pivotement (18) sensiblement parallèle à l'axe de rotation (A0) du support (12), et une tête de préhension (20) qui est apte à supporter au moins un objet et qui est montée coulissante par rapport à la platine (16), suivant une direction (B0) approximativement radiale par rapport à l'axe de rotation (A0) du support (12), entre une position rétractée proximale et une position allongée distale relativement à l'axe de rotation (A0), du type dans lequel la tête de préhension (20) est fixée en porte-à-faux sur le tronçon (89) d'extrémité distale d'un coulisseau (22) coulissant dans une glissière (24) fixée sur la platine (16), et du type comportant un premier et un second systèmes à came pour entraîner respectivement la tête de préhension (20) en coulissement et la platine (16) en pivotement, en fonction de la position angulaire du bras (14) autour de l'axe de rotation (A0) du support (12), **caractérisé en ce que** la glissière (24) comporte une rainure (25) ouverte vers le bas, **en ce que** le coulisseau (22) est réalisé en une seule pièce globalement en forme de rail, le profil du coulisseau (22) étant complémentaire du profil de la rainure (25) de la glissière (24), de sorte que le coulisseau (22) est retenu verticalement vers le bas par la glissière (24) et son profil, et **en ce que** la platine (16) comporte un corps (72) principal cylindrique coaxial à l'arbre de pivotement (18), la glissière (24) étant fixée sur la face transversale inférieure (74) du corps. (72 principal).

2. Dispositif (10) selon la revendication précédente, **caractérisé en ce que** le premier système à came comporte un premier élément suiveur de came (34) qui est fixé sur le tronçon (89) d'extrémité distale du coulisseau (22).

3. Dispositif (10) selon la revendication précédente, **caractérisé en ce que** le premier élément suiveur de came (34) est un galet dit d'élongation qui est monté à libre rotation sur un arbre (100) de galet sensiblement parallèle à l'axe de rotation (A0) du support (12), et **en ce que** l'arbre (100) de galet est fixé sur le tronçon (89) d'extrémité distale du coulisseau (22) à travers une patte inférieure (96) de la tête de préhension (20), de manière à constituer un moyen de fixation de la tête de préhension (20) sur le coulisseau (22).

4. Dispositif (10) selon l'une quelconque des revendications précédentes, **caractérisé en ce que** le bras (14) de transfert comporte un organe (84) de rappel qui est interposé globalement suivant la direction (B0) entre le tronçon (89) d'extrémité distale du coulisseau (22) et la platine (16) de manière à rappeler la tête de préhension (20) vers sa position rétractée.

5. Dispositif (10) selon la revendication précédente prise en combinaison avec la revendication 3, **caractérisé en ce que** l'extrémité distale (106) de l'organe (84) de rappel est fixée sur l'arbre (100) de galet portant le galet d'élongation (34).

6. Dispositif (10) selon la revendication 4 ou 5, **caractérisé en ce que** la platine (16) comporte un corps (72) principal qui est muni d'une jambe (76) de pivotement portant au moins un élément suiveur de came (36, 38) appartenant au second système à came, et **en ce que** l'extrémité proximale (83) de l'organe (84) de rappel est fixée sur la jambe (76) de pivotement.

7. Dispositif (10) selon l'une quelconque des revendications 4 à 6, **caractérisé en ce que** l'organe (84) de rappel est un ressort à boudin de traction qui s'étend entièrement sous la face inférieure (98) du coulisseau (22) en position rétractée.

8. Dispositif (10) selon l'une quelconque des revendications précédentes, **caractérisé en ce que** la tête de préhension (20) comporte une patte (90) d'extrémité pour sa fixation sur la face (92) transversale d'extrémité distale du coulisseau (22) et une vis de fixation (94) qui est montée vissée dans la face (92) transversale d'extrémité distale du coulisseau (22) à travers la patte (90) d'extrémité.

9. Dispositif (10) selon l'une quelconque des revendications précédentes, **caractérisé en ce que** le tronçon d'extrémité proximale (108) du coulisseau (22) comporte une butée (110) qui est susceptible de coopérer avec une surface associée (112) du corps principal (72) de la platine (16) pour déterminer la course maximale d'élongation de la tête de préhension (20).

10. Dispositif (10) selon l'une quelconque des revendications précédentes, **caractérisé en ce que** la platine (16) comporte un palier à roulements (68) qui reçoit le tronçon d'extrémité axiale inférieure (70) de l'arbre de pivotement (18) de manière que la platine (16) soit montée libre à rotation autour de l'arbre de pivotement (18).

11. Dispositif (10) selon la revendication précédente, **caractérisé en ce que** l'arbre de pivotement (18) comporte un tronçon (60) intermédiaire fileté qui est vissé dans une entretoise (50) fixée sur le support (12) tournant pour permettre un réglage en hauteur de la platine (16) par rapport au support (12) tournant, et des moyens de blocage (64) de l'arbre de pivotement (18) en position réglée par rapport à l'entretoise (50).

12. Dispositif (10) selon la revendication précédente, **caractérisé en ce que** l'extrémité axiale supérieure de l'arbre de pivotement (18) comporte un moyen d'entraînement (66) en rotation de l'arbre de pivotement (18) en vue du réglage en hauteur de la platine (16).

## Claims

1. Device (10) for conveying objects such as preforms and bottles, of the type comprising a rotating support (12) which is driven in rotation continuously about a substantially vertical axis of rotation (AO) and which carries a transfer arm (14), of the type in which the transfer arm (14) comprises a supporting element (16) which is mounted in a swivelling manner with respect to the rotating support (12), about a swivelling spindle (18) which is substantially parallel to the axis of rotation (AO) of the support (12), and a grasping head (20) which is able to support at last one object and which is mounted in a sliding manner with respect to the supporting element (16), in a direction (BO) approximately radial with respect to the axis of rotation (AO) of the support (12), between a proximal retracted position and a distal extended position with respect to the axis of rotation (AO), of the type in which the grasping head (20) is attached on a slider (22) sliding in a slide (24) fixed to the supporting element (16), and of the type comprising a first cam system and a second cam system for driving the grasping head (20) in its sliding and the supporting element (16) in its swivelling respectively, according to the angular position of the arm (14) about the axis of rotation (AO) of the support (12),
**characterized in that** the slide (24) comprises a groove (25), **in that** the slider (22) is produced in one piece with the overall shape of a rail, the profile of the slider (22) being complementary to that of the profile of the groove (25) of the slide (24), such that the slider (22) is held vertically downwards by the slide (24) and its profile, and **in that** the grasping head (20) is attached cantilevered on the distal end section (89) of the slider (22).

2. Device (10) according to the preceding claim, **characterized in that** the first cam system comprises a first cam follower element (34) which is fixed to the distal end section (89) of the slider (22).

3. Device (10) according to the preceding claim, **characterized in that** the first cam follower element (34) is a roller called the extension roller which is mounted freely rotating on a roller spindle (100) substantially parallel with the axis of rotation (AO) of the support (12), and **in that** the roller spindle (100) is fixed on the distal end section (89) of the slider (22) through a lower lug (96) of the grasping head (20), in such a way as to constitute a means of fixing the grasping head (20) on the slider (22).

4. Device (10) according to any one of the preceding claims, **characterized in that** the transfer arm (14) comprises a return device (84) which is interposed totally along the direction (BO) between the distal end section (89) of the slider (22) and the supporting element (16) in such a way as to return the grasping head (20) to its retracted position.

5. Device (10) according to the preceding claim, taken in combination with Claim 3, **characterized in that** the distal end (106) of the return device (84) is fixed on the roller spindle (100) carrying the extension roller (34).

6. Device (10) according to Claim 4 or 5, **characterized in that** the supporting element (16) comprises a main body (72) which is provided with a swivelling leg (76) carrying at least one cam follower element (36, 38) which is part of the second cam system, and **in that** the proximal end (83) of the return device (84) is fixed on the swivelling leg (76).

7. Device (10) according to any one of Claims 4 to 6, **characterized in that** the return device (84) is a spiral draw-spring which extends entirely under the lower face (98) of the slider (22) in the retracted position.

8. Device (10) according to any one of the preceding claims, **characterized in that** the grasping head (20) comprises an end lug (90) for fixing it to the distal end transverse face (92) of the slider (22) and a fixing screw (94) which is screwed into the distal end transverse face (92) of the slider (22) through the end lug (90).

9. Device (10) according to any one of the preceding claims, **characterized in that** the proximal end section (108) of the slider (22) comprises a stop (110) which is able to cooperate with an associated surface (112) of the supporting element (16) for determining the maximum extension travel of the grasping head (20).

10. Device (10) according to any one of the preceding claims, **characterized in that** the supporting element (16) comprises a ball bearing (68) which receives the lower axial end (70) of the swivelling spindle (18) such that the supporting element (16) is mounted freely rotating about the swivelling spindle (18).

11. Device (10) according to the preceding claim, **characterized in that** the swivelling spindle (18) comprises a threaded intermediate section (60) which is screwed into a spacer (50) fixed to the rotating support (12) to allow height adjustment of the supporting element (16) with respect to the rotating support (12) and means (64) of locking the swivelling spindle (18) in an adjusted position with respect to the spacer (50).

12. Device (10) according to the preceding claim, **characterized in that** the upper axial end of the swivelling spindle (18) comprises a means (66) of driving the swivelling spindle (18) in rotation for the purpose of adjusting the height of the supporting element (16).

## Patentansprüche

1. Fördereinrichtung (10) für Gegenstände wie Vorformlinge und Flaschen, welche einen Drehständer (12) aufweist, der auf kontinuierliche Weise um eine im Wesentlichen senkrechte Rotationsachse (A0) in Rotation gebracht wird und der einen Übergabearm (14) aufweist, wobei der Übergabearm (14) eine Platte (16) aufweist, die bezogen auf den Drehständer (12) um eine Schwenkwelle (18), die im Wesentlichen parallel zur Rotationsachse (A0) des Ständers (12) ist, schwenkbar angebracht ist, sowie einen Greifkopf (20), der in der Lage ist, wenigstens einen Gegenstand zu tragen und der bezogen auf die Platte (16) gleitend entlang einer in etwa radialen Richtung (B0) bezogen auf die Rotationsachse (A0) des Ständers (12) zwischen einer nahen eingezogenen Position und einer zu der Rotationsachse (A0) relativ fernen gestreckten Position angebracht ist, bei welcher der Greifkopf (20) freitragend auf einem fernen Endstück (89) des Schlittens (22) befestigt ist, der in einer Gleitschiene (24) gleitet, die auf der Platte (16) befestigt ist, und ein erstes und ein zweites Nockensystem aufweist, um entsprechend der Winkelposition des Arms (14) um die Rotationsachse (A0) des Ständers (12) jeweils den Greifkopf (20) zum Gleiten und die Platte (16) zum Schwenken zu bringen,
**dadurch gekennzeichnet, dass** die Gleitschiene (24) eine nach unten geöffnete Nut (25) aufweist, **dadurch**, dass der Schlitten (22) einstückig im Allgemeinen in Form einer Schiene hergestellt ist, wobei das Profil des Schlittens (22) komplementär zu dem Profil der Nut (25) der Gleitschiene (24) ist, so dass der Schlitten (22) durch die Gleitschiene (24) und ihr Profil senkrecht nach unten zurückgehalten wird, und **dadurch**, dass die Platte (16) koaxial zur Schwenkwelle (18) einen zylinderförmigen Hauptkörper (72) aufweist, wobei die Gleitschiene (24) auf der unteren Querseite (74) des Hauptkörpers (72) befestigt ist.

2. Einrichtung (10) gemäß dem vorausgegangenen Anspruch, **dadurch gekennzeichnet, dass** das erste Nockensystem ein erstes Mitläuferelement (34) aufweist, das auf dem fernen Endstück (89) des Schlittens (22) befestigt ist.

3. Einrichtung (10) gemäß dem vorausgegangenen Anspruch, **dadurch gekennzeichnet, dass** das erste Mitläuferelement (34) eine Verlängerung genannte Rolle ist, die zur freien Rotation auf einer Welle (100) der Rolle, die im Wesentlichen parallel zur Rotationsachse (A0) des Ständers (12) ist, angebracht ist, und **dadurch**, dass die Welle (100) der Rolle an dem fernen Endstück (89) des Schlittens (22) durch eine untere Lasche (96) des Greifkopfes (20) befestigt ist, so dass sie ein Befestigungsmittel für den Greifkopf (20) auf dem Schlitten (22) bildet.

4. Einrichtung (10) gemäß einem der vorausgegangenen Ansprüche, **dadurch gekennzeichnet, dass** der Übergabearm (14) ein Rückholorgan (84) aufweist, das im Allgemeinen entlang der Richtung (B0) zwischen das ferne Endstück (89) des Schlittens (22) und die Platte (16) zwischengesetzt ist, um den Greifkopf (20) zu seiner zurückgezogenen Position zurückzuholen.

5. Einrichtung (10) gemäß dem vorausgegangenen Anspruch in Kombination mit Anspruch 3, **dadurch gekennzeichnet, dass** das ferne Ende (106) des Rückholorgans (84) auf der Welle (100) der Rolle befestigt ist, welche die Verlängerungsrolle (34) trägt.

6. Einrichtung (10) gemäß Anspruch 4 oder 5, **dadurch gekennzeichnet, dass** die Platte (16) einen Hauptkörper (72) aufweist, welcher mit einem Schwenkfuß (76) ausgestattet ist, der wenigstens ein Nocken-Mitläuferelement (36, 38) trägt, das dem zweiten Nockensystem zugeordnet ist, und **dadurch**, dass das nahe Ende (83) des Rückholorgans (84) auf dem Schwenkfuß (76) befestigt ist.

7. Einrichtung (10) gemäß einem der Ansprüche 4 bis 6, **dadurch gekennzeichnet, dass** das Rückholorgan (84) eine Spiralfeder ist, die sich in zurückgezogener Position vollständig unter der Unterseite (98) des Schlittens (22) erstreckt.

8. Einrichtung (10) gemäß einem der vorausgegangenen Ansprüche, **dadurch gekennzeichnet, dass** der Greifkopf (20) zu seiner Befestigung auf der Querseite (92) des fernen Endes des Schlittens (22) eine Lasche (90) sowie eine Befestigungsschraube(94), die in der Querseite (92) des fernen Endes des Schlittens (22) durch die Endlasche (90) eingeschraubt angebracht ist, aufweist.

9. Einrichtung (10) gemäß einem der vorausgegangenen Ansprüche, **dadurch gekennzeichnet, dass** das nahe Endstück (108) des Schlittens (22) einen Anschlag (110) aufweist, der in der Lage ist, mit einer der dem Hauptkörper (72) der Platte (16) zugeordneten Fläche (112) zusammenzuwirken, um den maximalen Verlängerungsweg des Greifkopfs (20) zu bestimmen.

10. Einrichtung (10) gemäß einem der vorausgegangenen Ansprüche, **dadurch gekennzeichnet, dass** die Platte (16) ein Wälzlager (68) aufweist, welches das untere axiale Endstück (70) der Schwenkwelle (18) aufnimmt, so dass die Platte (16) frei zur Rotation um die Schwenkwelle (18) angebracht ist.

11. Einrichtung (10) gemäß dem vorausgegangenen Anspruch, **dadurch gekennzeichnet, dass** die Schwenkwelle (18) ein mit Gewinde versehenes Mittelstück (60), welches in einen Abstandshalter (50) geschraubt ist, der auf dem Drehständer (12) befestigt ist, um ein Einstellen der Höhe der Platte (16) bezogen auf den Drehständer (12) zu ermöglichen, sowie Blockiermittel (64) für die Schwenkwelle (18) in bezogen auf den Abstandshalter (50) eingestellter Position aufweist.

12. Einrichtung (10) gemäß dem vorausgegangenen Anspruch, **dadurch gekennzeichnet, dass** das obere axiale Ende der Schwenkwelle (18) ein Mittel zum in Rotation Bringen (66) der Schwenkwelle (18) hinsichtlich der Einstellung der Höhe der Platte (16) aufweist.
